# EUROPEAN PATENT SPECIFICATION

(11) **EP 3 493 604 B1**
(45) Date of publication and mention of the grant of the patent: **30.12.2020**
(21) Application number: 17855005.9
(22) Date of filing: 29.09.2017
(51) Int. Cl.: H04W 52/02, H04L 5/00, H04B 7/06

(54) **SIGNAL PROCESSING METHOD, DEVICE AND SYSTEM**
SIGNALVERARBEITUNGSVERFAHREN, -VORRICHTUNG UND -SYSTEM
PROCÉDÉ, DISPOSITIF ET SYSTÈME DE TRAITEMENT DE SIGNAL

(30) Priority: 29.09.2016 CN 201610867679
(43) Date of publication of application: 05.06.2019
(73) Proprietor: Huawei Technologies Co., Ltd., Longgang District Shenzhen, Guangdong 518129 (CN)
(72) Inventor: LIU, Jianqin, Shenzhen Guangdong 518129 (CN); QU, Bingyu, Shenzhen Guangdong 518129 (CN)
(74) Representative: Thun, Clemens
(86) International application number: PCT/CN2017/104498
(87) International publication number: WO 2018/059555

(56) References cited:
- WO-A1-2013/046023
- WO-A1-2014/139303
- WO-A1-2016/056980
- WO-A2-2011/115421
- CN-A- 101 330 486
- US-A1- 2014 003 240
- US-A1- 2016 197 659
- ALCATEL-LUCENT SHANGHAI BELL ET AL: "Considerations on CSI feedback enhancements for high-priority antenna configurations", 3GPP DRAFT; R1-112420 CONSIDERATIONS ON CSI FEEDBACK ENHANCEMENTS FOR HIGH-PRIORITY ANTENNA CONFIGURATIONS_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 18 August 2011 (2011-08-18), XP050537814, [retrieved on 2011-08-18]

## Description

### TECHNICAL FIELD

The present invention relates to the field of communications technologies, and in particular, to a signal processing method, a device, and a system.

### BACKGROUND

With development of communications technologies, it is difficult for current spectrum resources to satisfy an increased capacity requirement of a user. To resolve the problem, a high frequency band (especially a millimeter wave frequency band) having larger available bandwidth gradually becomes a candidate frequency band for a next-generation communications system. However, a difference between the high frequency band and an operating frequency band (for example, a frequency band below 3 GHz) supported by a system such as an existing Long Term Evolution (English: Long Term Evolution, LTE) system is that the high frequency band causes a greater path loss. Especially, impact of factors such as atmosphere and vegetation further aggravates a path loss in a high frequency band radio propagation procedure.

WO 2013/046023 A1 refers to a method of transmitting a DMRS in a base station. The method comprises the steps of: notifying a user equipment of configuration information of the base station about a group of DRMS orthogonal sequences and indexes thereof; mapping the group of DRMS orthogonal sequences to a set of resource elements in a sub-frame, wherein the group of DRMS orthogonal sequences is generated from a first group of orthogonal sequences and a scrambled pseudorandom sequence; and transmitting the sub-frame over a downlink channel. The scrambled pseudorandom sequence is generated by multiplying a pseudorandom sequence C by a scrambling sequence V, wherein the scrambling sequence V is a row vector of a matrix II, and the matrix II c ^{∗}n = 0 satisfies the equations of:, wherein II is a conjugate II ^{∗} II = alpha.I transpose of II, I is an identity matrix, and a is a constant.

To reduce the path loss in the high frequency band radio propagation procedure and improve coverage of signal transmission in a high frequency scenario, currently, a public channel or signal at a high frequency band is transmitted based on beamforming (an analog beam or a digital-domain beam). A public channel or signal under action of each shaped beam correspondingly covers a group of users. The user may be handed over between different shaped beams, to select a shaped beam having the best channel transmission condition to serve the user, so that all the users have good coverage performance.

Because channel transmission conditions (for example, delay spread and path losses) corresponding to different shaped beams are different, configuration information (for example, a parameter configuration) of channels or signals of different shaped beams is also different. Therefore, when a user is handed over between different shaped beams, the user needs to perform Radio Resource Control (English: Connection Reconfiguration Complete, RRC) reconfiguration on configuration information of a channel or signal of a shaped beam after the handover. For example, when the user is handed over from a shaped beam 1 to a shaped beam 2, transmission of a channel and signal (for example, a broadcast channel, a public control channel, a synchronizing signal, or a public reference signal) of the shaped beam 1 is also correspondingly handed over to the shaped beam 2, and the channel and signal are reconfigured based on a requirement of the shaped beam 2. In other words, in the prior art, each time a user is handed over between beams, RRC reconfiguration occurs. In this case, if the user is frequently handed over between different beams, a problem of frequent RRC reconfiguration is caused.

### SUMMARY

This application provides a signal processing method, a device, and a system, to resolve a problem of frequent RRC reconfiguration caused by frequently handing over a user between different beams.

This problem is solved by the subject matter of the independent claims. Further implementation forms are provided in the dependent claims.

The present invention is defined by the independent claims. Embodiments shown in the following, which are labelled as inventive embodiments, but are not covered by the scope of protection afforded by the independent claims, are to be understood as examples helpful for understanding the invention, but not as embodiments of the invention.

The following technical solutions are used in the embodiments of the present invention to achieve the foregoing objective.

According to a first aspect, a signal sending method is provided. The method may include:
notifying, by a base station, user equipment UE of at least one public information process, where each public information process corresponds to at least one public signal resource, and different public signal resources in a same public information process have same configuration information; and sending, by the base station, a public signal to the UE based on configuration information of a public signal resource in the at least one public information process.

Each public signal resource may correspond to one shaped beam.

The configuration information of the public signal resource may include at least one or more of a sequence setting of the public signal resource, a scrambling setting of the public signal resource, and configuration information of a random access channel included in the public signal resource.

In this way, different public signal resources corresponding to same configuration information are placed into a same public information process, so that the base station may send, based on the same configuration information, public signals corresponding to the public signal resources to the UE. When the UE is handed over between different shaped beams, and public signal resources corresponding to different shaped beams are in a same public information process, configuration information of the public signal resources remains unchanged. In this case, the UE does not need to send an RRC reconfiguration request to the base station, and the base station does not need to perform RRC reconfiguration on a public signal of the UE either.

With reference to the first aspect, in an implementable manner of the first aspect, the base station may notify the UE of the at least one public information process by using higher layer signaling, control signaling, or another public signal different from the public signal, where the configuration information of the public signal resource in the public information process is notified by the base station to the user equipment by using the higher layer signaling or the control signaling.

In actual application, because transmission of a random access channel of the UE is bound to an optimal public signal resource, when the UE detects and selects an optimal public signal resource from a plurality of public signal resources, the UE transmits the random access channel based on the optimal public signal resource. That transmission of the random access channel is bound to the optimal public signal resource means that transmission resource information of the random access channel is configured by the optimal public signal, or the optimal public signal resource and access response information that is associated with the random access channel correspond to a same shaped beam, or a received shaped beam corresponding to the random access channel is the same as a shaped beam corresponding to the optimal public signal resource. In this case, if the UE is frequently handed over between shaped beams, frequent access information reconfiguration and random access procedures are caused. Therefore, to avoid this problem, with reference to the first aspect or the implementable manner of the first aspect, in another implementable manner of the first aspect, the method may further include:
if a public information process corresponding to a random access channel sent by the UE for the i^{th} time is different from a public information process corresponding to a random access channel sent by the UE for the (i-1)^{th} time, receiving, by the base station, the random access channel sent by the UE for the i^{th} time; or
if a public information process corresponding to a random access channel sent by the UE for the i^{th} time is the same as a public information process corresponding to a random access channel sent by the UE for the (i-1)^{th} time, skipping receiving, by the base station, the random access channel sent by the UE for the i^{th} time, where i is an integer greater than or equal to 2.

In this way, when transmitting a random access channel, the UE may initiate a new random access channel procedure only when corresponding public information processes are different, thereby avoiding frequent access information reconfiguration and random access procedures caused by frequently handing over the UE between shaped beams, and reducing configuration signaling and UE power consumption.

In addition, in actual application, transmission of an uplink sounding reference signal (English: Sounding Reference Signal, SRS) of the UE is also bound to an optimal public signal resource. The UE may select an optimal public signal resource based on detection on a plurality of public signal resources, and transmit the SRS based on the optimal public signal resource. That transmission of the uplink sounding reference signal is bound to the optimal public signal resource means that the base station receives the uplink sounding reference signal by using a shaped beam corresponding to the optimal public signal resource. Therefore, to ensure that transmission of the uplink sounding reference signal of the UE is always based on a relatively optimal received shaped beam, with reference to the first aspect or the implementable manners of the first aspect, in still another implementable manner of the first aspect, the method may further include:
if a public information process corresponding to an uplink sounding reference signal sent by the UE for the i^{th} time is the same as a public information process corresponding to an uplink sounding reference signal sent by the UE for the (i-1)^{th} time, receiving, by the base station, the uplink sounding reference signal sent by the UE for the i^{th} time, where i is an integer greater than or equal to 2; or
if a public information process corresponding to an uplink sounding reference signal sent by the UE for the i^{th} time is different from a public information process corresponding to an uplink sounding reference signal sent by the UE for the (i-1)^{th} time, skipping receiving, by the base station, the uplink sounding reference signal sent by the UE for the i^{th} time.

In this way, the UE sends the uplink sounding reference signal only when received shaped beams corresponding to transmission of the uplink sounding reference signal are located in a same public information process, thereby ensuring that transmission of the uplink sounding reference signal of the UE is always based on a relatively optimal received shaped beam, so that transmission performance of the uplink sounding reference signal is ensured.

With reference to the first aspect or the implementable manners of the first aspect, in still another implementable manner of the first aspect, the method may further include:
if a public information process corresponding to a public signal resource index sent by the UE for the i^{th} time is different from a public information process corresponding to a public signal resource index sent by the UE for the (i-1)^{th} time, receiving, by the base station, the public signal resource index sent by the UE for the i^{th} time, where i is an integer greater than or equal to 2; or
if a public information process corresponding to a public signal resource index sent by the UE for the i^{th} time is the same as a public information process corresponding to a public signal resource index sent by the UE for the (i-1)^{th} time, skipping receiving, by the base station, the public signal resource index sent by the UE for the i^{th} time.

In this way, by using this solution, when sending a public signal resource index, the UE may send the public signal resource index only when corresponding public information processes are different, thereby avoiding that the UE reports a public signal resource index corresponding to an optimal public signal resource to the base station once detecting the optimal public signal resource, and greatly reducing UE power consumption.

According to a second aspect, a signal receiving method is provided. The method may include:
obtaining, by user equipment UE, at least one public information process notified by a base station, where each public information process corresponds to at least one public signal resource, and different public signal resources in a same public information process have same configuration information; and receiving, by the UE, a public signal sent by the base station based on configuration information of a public signal resource in the at least one public information process.

Each public signal resource may correspond to one shaped beam.

The configuration information of the public signal resource may include at least one or more of a sequence setting of the public signal resource, a scrambling setting of the public signal resource, and configuration information of a random access channel included in the public signal resource.

Tn this way, different public signal resources corresponding to same configuration information are placed into a same public information process. When the UE is handed over between different shaped beams, and public signal resources corresponding to different shaped beams are in a same public information process, configuration information of the public signal resources remains unchanged. In this case, the UE does not need to send an RRC reconfiguration request to the base station, and the base station does not need to perform RRC reconfiguration on a public signal of the UE either.

With reference to the second aspect, in an implementable manner of the second aspect, the UE may obtain configuration information sent by the base station by using higher layer signaling, control information, or another public signal different from the public signal. The configuration information of the public signal resource in the at least one public information process is notified by the base station to the UE by using the higher layer signaling or the control signaling.

With reference to the second aspect or the implementable manner of the second aspect, in another implementable manner of the second aspect, the method may further include:
if the UE determines that a public information process corresponding to a random access channel sent by the UE for the i^{th} time is different from a public information process corresponding to a random access channel sent by the UE for the (i-1)^{th} time, sending, by the UE, the random access channel to the base station for the i^{th} time, where i is an integer greater than or equal to 2; or
if the UE determines that a public information process corresponding to a random access channel sent by the UE for the i^{th} time is the same as a public information process corresponding to a random access channel sent by the UE for the (i-1)^{th} time, skipping sending, by the UE, the random access channel to the base station for the i^{th} time.

In this way, when transmitting a random access channel, the UE may initiate a new random access channel procedure only when corresponding public information processes are different, thereby avoiding frequent access information reconfiguration and random access procedures caused by frequently handing over the UE between shaped beams, and reducing configuration signaling and UE power consumption.

With reference to the second aspect or the implementable manners of the second aspect, in still another implementable manner of the second aspect, the method may further include:
if the UE determines that a public information process corresponding to an uplink sounding reference signal sent by the UE for the i^{th} time is the same as a public information process corresponding to an uplink sounding reference signal sent by the UE for the (i-1)^{th} time, sending, by the UE, the uplink sounding reference signal to the base station for the i^{th} time, where i is an integer greater than or equal to 2; or
if the UE determines that a public information process corresponding to an uplink sounding reference signal sent by the UE for the i^{th} time is different from a public information process corresponding to an uplink sounding reference signal sent by the UE for the (i-1)^{th} time, skipping sending, by the UE, the uplink sounding reference signal to the base station for the i^{th} time.

In this way, the UE sends the uplink sounding reference signal only when received shaped beams corresponding to transmission of the uplink sounding reference signal are located in a same public information process, thereby ensuring that transmission of the uplink sounding reference signal of the UE is always based on a relatively optimal received shaped beam, so that transmission performance of the uplink sounding reference signal is ensured.

With reference to the second aspect or the implementable manners of the second aspect, in still another implementable manner of the second aspect, the method may further include:
if the UE determines that a public information process corresponding to a public signal resource index sent by the UE for the i^{th} time is different from a public information process corresponding to a public signal resource index sent by the UE for the (i-1)^{th} time, sending, by the UE, the public signal resource index to the base station for the i^{th} time, where i is an integer greater than or equal to 2; or
if the UE determines that a public information process corresponding to a public signal resource index sent by the UE for the i^{th} time is the same as a public information process corresponding to a public signal resource index sent by the UE for the (i-1)^{th} time, skipping sending, by the UE, the public signal resource index to the base station for the i^{th} time.

In this way, by using this solution, when sending a public signal resource index, the UE may send the public signal resource index only when corresponding public information processes are different, thereby avoiding that the UE reports a public signal resource index corresponding to an optimal public signal resource to the base station once detecting the optimal public signal resource, and greatly reducing UE power consumption.

According to a third aspect, a base station is provided. The base station may include:
a sending unit, configured to notify user equipment UE of at least one public information process, where each public information process corresponds to at least one public signal resource, and different public signal resources in a same public information process have same configuration information, where
the sending unit is further configured to send a public signal to the UE based on configuration information of a public signal resource in the at least one public information process.

For a specific implementation of the third aspect, refer to the behavior function of the base station in the signal sending method according to the first aspect or the possible implementations of the first aspect.

According to a fourth aspect, a base station is provided. The base station may include:
a transceiver, configured to: notify user equipment UE of at least one public information process, where each public information process corresponds to at least one public signal resource, and different public signal resources in a same public information process have same configuration information; and
send a public signal to the UE based on configuration information of a public signal resource in the at least one public information process.

For a specific implementation of the fourth aspect, refer to the behavior function of the base station in the signal sending method according to the first aspect or the possible implementations of the first aspect.

According to a fifth aspect, a non-volatile computer-readable storage medium storing one or more programs is provided. The one or more programs include instructions. When the instructions are executed by the base station according to the third aspect or the fourth aspect or any one of the foregoing possible implementations, the base station is enabled to perform the following event:
notifying user equipment UE of at least one public information process, where each public information process corresponds to at least one public signal resource, and different public signal resources in a same public information process have same configuration information; and sending a public signal to the UE based on configuration information of a public signal resource in the at least one public information process.

For specific implementations of the third aspect, the fourth aspect, and the fifth aspect, refer to the behavior function of the base station in the signal sending method according to the first aspect or the possible implementations of the first aspect. Details are not described herein again. In addition, the base station provided in the third aspect, the fourth aspect, and the fifth aspect can achieve a same beneficial effect as that of the first aspect.

According to a sixth aspect, UE is provided. The UE may include:
a receiving unit, configured to obtain at least one public information process notified by a base station, where each public information process corresponds to at least one public signal resource, and different public signal resources in a same public information process have same configuration information, where
the receiving unit is further configured to receive a public signal sent by base station based on configuration information of a public signal resource in the at least one public information process.

For a specific implementation of the sixth aspect, refer to the behavior function of the UE in the signal receiving method according to the second aspect or the possible implementations of the second aspect.

According to a seventh aspect, UE is provided. The UE may include:
a transceiver, configured to: obtain at least one public information process notified by a base station, where each public information process corresponds to at least one public signal resource, and different public signal resources in a same public information process have same configuration information; and
receive a public signal sent by base station based on configuration information of a public signal resource in the at least one public information process.

For a specific implementation of the seventh aspect, refer to the behavior function of the UE in the signal receiving method according to the second aspect or the possible implementations of the second aspect.

According to an eighth aspect, a non-volatile computer-readable storage medium storing one or more programs is provided. The one or more programs include instructions. When the instructions are executed by the UE according to the sixth aspect or the seventh aspect or any one of the foregoing possible implementations, the UE is enabled to perform the following events:
obtaining at least one public information process notified by a base station, where each public information process corresponds to at least one public signal resource, and different public signal resources in a same public information process have same configuration information; and
receiving a public signal sent by base station based on configuration information of a public signal resource in the at least one public information process.

For specific implementations of the sixth aspect, the seventh aspect, and the eighth aspect, refer to the behavior function of the UE in the signal receiving method according to the second aspect or the possible implementations of the second aspect. Details are not described herein again. In addition, the UE provided in the sixth aspect, the seventh aspect, and the eighth aspect can achieve a same beneficial effect as that of the second aspect.

According to a ninth aspect, a signal processing system is provided, including the base station according to the third aspect, the fourth aspect, or the fifth aspect, and the base station according to the sixth aspect, the seventh aspect, or the eighth aspect.

According to a tenth aspect, a signal sending method is provided. The method may include:
notifying, by a base station, user equipment UE of at least one signal resource set, where each signal resource set corresponds to at least one signal resource, and different signal resources in a same signal resource set have same configuration information; and sending, by the base station, a signal to the UE based on configuration information of a signal resource in the at least one signal resource set.

Each signal resource may correspond to one shaped beam.

The configuration information of the signal resource may include at least one or more of a sequence setting of the signal resource, a scrambling setting of the signal resource, and configuration information of a random access channel included in the signal resource.

In this way, different signal resources corresponding to same configuration information are placed into a same signal resource set, so that the base station may send, based on the same configuration information, signals corresponding to the signal resources to the UE. When the UE is handed over between different shaped beams, and signal resources corresponding to different shaped beams are in a same signal resource set, configuration information of the signal resources remains unchanged. In this case, the UE does not need to send an RRC reconfiguration request to the base station, and the base station does not need to perform RRC reconfiguration on a signal of the UE either.

With reference to the tenth aspect, in an implementable manner of the tenth aspect, the base station may notify the UE of the at least one signal resource set by using higher layer signaling, control signaling, or another signal different from the signal, where the configuration information of the signal resource in the signal resource set is notified by the base station to the user equipment by using the higher layer signaling or the control signaling.

In actual application, because transmission of a random access channel of the UE is bound to an optimal signal resource, when the UE detects and selects an optimal signal resource from a plurality of signal resources, the UE transmits the random access channel based on the optimal signal resource. That transmission of the random access channel is bound to the optimal signal resource means that transmission resource information of the random access channel is configured by the optimal signal, or the optimal signal resource and access response information that is associated with the random access channel correspond to a same shaped beam, or a received shaped beam corresponding to the random access channel is the same as a shaped beam corresponding to the optimal signal resource. In this case, if the UE is frequently handed over between shaped beams, frequent access information reconfiguration and random access procedures are caused. Therefore, to avoid this problem, with reference to the tenth aspect or the implementable manner of the tenth aspect, in another implementable manner of the tenth aspect, the method may further include:
if a signal resource set corresponding to a random access channel sent by the UE for the i^{th} time is different from a signal resource set corresponding to a random access channel sent by the UE for the (i-1)^{th} time, receiving, by the base station, the random access channel sent by the UE for the i^{th} time; or
if a signal resource set corresponding to a random access channel sent by the UE for the i^{th} time is the same as a signal resource set corresponding to a random access channel sent by the UE for the (i-1)^{th} time, skipping receiving, by the base station, the random access channel sent by the UE for the i^{th} time, where i is an integer greater than or equal to 2.

In this way, when transmitting a random access channel, the UE may initiate a new random access channel procedure only when corresponding signal resource sets are different, thereby avoiding frequent access information reconfiguration and random access procedures caused by frequently handing over the UE between shaped beams, and reducing configuration signaling and UE power consumption.

In addition, in actual application, transmission of an uplink sounding reference signal (English: Sounding Reference Signal, SRS) of the UE is also bound to an optimal signal resource. The UE may select an optimal signal resource based on detection on a plurality of signal resources, and transmit the SRS based on the optimal signal resource. That transmission of the uplink sounding reference signal is bound to the optimal signal resource means that the base station receives the uplink sounding reference signal by using a shaped beam corresponding to the optimal signal resource. Therefore, to ensure that transmission of the uplink sounding reference signal of the UE is always based on a relatively optimal received shaped beam, with reference to the tenth aspect or the implementable manners of the tenth aspect, in still another implementable manner of the tenth aspect, the method may further include:
if a signal resource set corresponding to an uplink sounding reference signal sent by the UE for the i^{th} time is the same as a signal resource set corresponding to an uplink sounding reference signal sent by the UE for the (i-1)^{th} time, receiving, by the base station, the uplink sounding reference signal sent by the UE for the i^{th} time, where i is an integer greater than or equal to 2; or
if a signal resource set corresponding to an uplink sounding reference signal sent by the UE for the i^{th} time is different from a signal resource set corresponding to an uplink sounding reference signal sent by the UE for the (i-1)^{th} time, skipping receiving, by the base station, the uplink sounding reference signal sent by the UE for the i^{th} time.

In this way, the UE sends the uplink sounding reference signal only when received shaped beams corresponding to transmission of the uplink sounding reference signal are located in a same signal resource set, thereby ensuring that transmission of the uplink sounding reference signal of the UE is always based on a relatively optimal received shaped beam, so that transmission performance of the uplink sounding reference signal is ensured.

With reference to the tenth aspect or the implementable manners of the tenth aspect, in still another implementable manner of the tenth aspect, the method may further include:
if a signal resource set corresponding to a signal resource index sent by the UE for the i^{th} time is different from a signal resource set corresponding to a signal resource index sent by the UE for the (i-1)^{th} time, receiving, by the base station, the signal resource index sent by the UE for the i^{th} time, where i is an integer greater than or equal to 2; or
if a signal resource set corresponding to a signal resource index sent by the UE for the i^{th} time is the same as a signal resource set corresponding to a signal resource index sent by the UE for the (i-1)^{th} time, skipping receiving, by the base station, the signal resource index sent by the UE for the i^{th} time.

In this way, by using this solution, when sending a signal resource index, the UE may send the signal resource index only when corresponding signal resource sets are different, thereby avoiding that the UE reports a signal resource index corresponding to an optimal signal resource to the base station once detecting the optimal signal resource, and greatly reducing UE power consumption.

With reference to the tenth aspect or the implementable manners of the tenth aspect, in still another implementable manner of the tenth aspect,
the signal includes at least one of a broadcast channel, a synchronizing signal, a cell-specific reference signal, system information, and an uplink sounding reference signal.

According to an eleventh aspect, a signal receiving method is provided. The method may include:
obtaining, by user equipment UE, at least one signal resource set notified by a base station, where each signal resource set corresponds to at least one signal resource, and different signal resources in a same signal resource set have same configuration information; and receiving, by the UE, a signal sent by the base station based on configuration information of a signal resource in the at least one signal resource set.

Each signal resource may correspond to one shaped beam.

The configuration information of the signal resource may include at least one or more of a sequence setting of the signal resource, a scrambling setting of the signal resource, and configuration information of a random access channel included in the signal resource.

In this way, different signal resources corresponding to same configuration information are placed into a same signal resource set. When the UE is handed over between different shaped beams, and signal resources corresponding to different shaped beams are in a same signal resource set, configuration information of the signal resources remains unchanged. In this case, the UE does not need to send an RRC reconfiguration request to the base station, and the base station does not need to perform RRC reconfiguration on a signal of the UE either.

With reference to the eleventh aspect, in an implementable manner of the eleventh aspect, the UE may obtain configuration information sent by the base station by using higher layer signaling, control information, or another signal different from the signal. The configuration information of the signal resource in the at least one signal resource set is notified by the base station to the UE by using the higher layer signaling or the control signaling.

With reference to the eleventh aspect or the implementable manners of the eleventh aspect, in still another implementable manner of the eleventh aspect, the method may further include:
if a signal resource set corresponding to a random access channel sent by the UE for the i^{th} time is the different from a signal resource set corresponding to a random access channel sent by the UE for the (i-1)^{th} time, sending, by the UE, the random access channel to the base station for the i^{th} time, where i is an integer greater than or equal to 2; or
if the UE determines that a signal resource set corresponding to a random access channel sent by the UE for the i^{th} time is the same as a signal resource set corresponding to a random access channel sent by the UE for the (i-1)^{th} time, skipping sending, by the UE, the random access channel to the base station for the i^{th} time.

In this way, when transmitting a random access channel, the UE may initiate a new random access channel procedure only when corresponding signal resource sets are different, thereby avoiding frequent access information reconfiguration and random access procedures caused by frequently handing over the UE between shaped beams, and reducing configuration signaling and UE power consumption.

With reference to the eleventh aspect or the implementable manners of the eleventh aspect, in still another implementable manner of the eleventh aspect, the method may further include:
if the UE determines that a signal resource set corresponding to an uplink sounding reference signal sent by the UE for the i^{th} time is the same as a signal resource set corresponding to an uplink sounding reference signal sent by the UE for the (i-1)^{th} time, sending, by the UE, the uplink sounding reference signal to the base station for the i^{th} time, where i is an integer greater than or equal to 2; or
if the UE determines that a signal resource set corresponding to an uplink sounding reference signal sent by the UE for the i^{th} time is different from a signal resource set corresponding to an uplink sounding reference signal sent by the UE for the (i-1)^{th} time, skipping sending, by the UE, the uplink sounding reference signal to the base station for the i^{th} time.

In this way, the UE sends the uplink sounding reference signal only when received shaped beams corresponding to transmission of the uplink sounding reference signal are located in a same signal resource set, thereby ensuring that transmission of the uplink sounding reference signal of the UE is always based on a relatively optimal received shaped beam, so that transmission performance of the uplink sounding reference signal is ensured.

With reference to the eleventh aspect or the implementable manners of the eleventh aspect, in still another implementable manner of the eleventh aspect, the method may further include:
if the UE determines that a signal resource set corresponding to a signal resource index sent by the UE for the i^{th} time is different from a signal resource set corresponding to a signal resource index sent by the UE for the (i-1)^{th} time, sending, by the UE, the signal resource index to the base station for the i^{th} time, where i is an integer greater than or equal to 2; or
if the UE determines that a signal resource set corresponding to a signal resource index sent by the UE for the i^{th} time is the same as a signal resource set corresponding to a signal resource index sent by the UE for the (i-1)^{th} time, skipping sending, by the UE, the signal resource index to the base station for the i^{th} time.

In this way, by using this solution, when sending a signal resource index, the UE may send the signal resource index only when corresponding signal resource sets are different, thereby avoiding that the UE reports a signal resource index corresponding to an optimal signal resource to the base station once detecting the optimal signal resource, and greatly reducing UE power consumption.

With reference to the eleventh aspect or the implementable manners of the eleventh aspect, in still another implementable manner of the eleventh aspect,
the signal includes at least one of a broadcast channel, a synchronizing signal, a cell-specific reference signal, system information, and an uplink sounding reference signal.

According to a twelfth aspect, a base station is provided. The base station may include:
a sending unit, configured to notify user equipment UE of at least one signal resource set, where each signal resource set corresponds to at least one signal resource, and different signal resources in a same signal resource set have same configuration information, where
the sending unit is further configured to send a signal to the UE based on configuration information of a signal resource in the at least one signal resource set.

For a specific implementation of the twelfth aspect, refer to the behavior function of the base station in the signal sending method according to the tenth aspect or the possible implementations of the tenth aspect.

According to a thirteenth aspect, a base station is provided. The base station may include:
a transceiver, configured to: notify user equipment UE of at least one signal resource set, where each signal resource set corresponds to at least one signal resource, and different signal resources in a same signal resource set have same configuration information; and
send a signal to the UE based on configuration information of a signal resource in the at least one signal resource set.

For a specific implementation of the thirteenth aspect, refer to the behavior function of the base station in the signal sending method according to the tenth aspect or the possible implementations of the tenth aspect.

According to a fourteenth aspect, a non-volatile computer-readable storage medium storing one or more programs is provided. The one or more programs include instructions. When the instructions are executed by the base station according to the twelfth aspect or the thirteenth aspect or any one of the foregoing possible implementations, the base station is enabled to perform the following event:
notifying user equipment UE of at least one signal resource set, where each signal resource set corresponds to at least one signal resource, and different signal resources in a same signal resource set have same configuration information; and sending a signal to the UE based on configuration information of a signal resource in the at least one signal resource set.

For specific implementations of the twelfth aspect, the thirteenth aspect, and the fourteenth aspect, refer to the behavior function of the base station in the signal sending method according to the tenth aspect or the possible implementations of the tenth aspect. Details are not described herein again. In addition, the base station provided in the twelfth aspect, the thirteenth aspect, and the fourteenth aspect can achieve a same beneficial effect as that of the tenth aspect.

According to a fifteenth aspect, UE is provided. The UE may include:
a receiving unit, configured to obtain at least one signal resource set notified by a base station, where each signal resource set corresponds to at least one signal resource, and different signal resources in a same signal resource set have same configuration information, where
the receiving unit is further configured to receive a signal sent by the base station based on configuration information of a signal resource in the at least one signal resource set.

For a specific implementation of the fifteenth aspect, refer to the behavior function of the UE in the signal receiving method according to the eleventh aspect or the possible implementations of the eleventh aspect.

According to a sixteenth aspect, UE is provided. The UE may include:
a transceiver, configured to: obtain at least one signal resource set notified by a base station, where each signal resource set corresponds to at least one signal resource, and different signal resources in a same signal resource set have same configuration information; and
receive a signal sent by the base station based on configuration information of a signal resource in the at least one signal resource set.

For a specific implementation of the sixteenth aspect, refer to the behavior function of the UE in the signal receiving method according to the eleventh aspect or the possible implementations of the eleventh aspect.

According to a seventeenth aspect, a non-volatile computer-readable storage medium storing one or more programs is provided. The one or more programs include instructions. When the instructions are executed by the UE according to the fifteenth aspect or the sixteenth aspect or any one of the foregoing possible implementations, the UE is enabled to perform the following events:
obtaining at least one signal resource set notified by a base station, where each signal resource set corresponds to at least one signal resource, and different signal resources in a same signal resource set have same configuration information; and
receiving a signal sent by the base station based on configuration information of a signal resource in the at least one signal resource set.

For specific implementations of the fifteenth aspect, the sixteenth aspect, and the seventeenth aspect, refer to the behavior function of the UE in the signal receiving method according to the eleventh aspect or the possible implementations of the eleventh aspect. Details are not described herein again. In addition, the UE provided in the fifteenth aspect, the sixteenth aspect, and the seventeenth aspect can achieve a same beneficial effect as that of the eleventh aspect.

According to an eighteenth aspect, a signal processing system is provided, including the base station according to the twelfth aspect, the thirteenth aspect, or the fourteenth aspect, and the base station according to the fifteenth aspect, the sixteenth aspect, or the seventeenth aspect.

### BRIEF DESCRIPTION OF DRAWINGS

FIG. 1 is a structural diagram of a wireless communications system;
FIG. 2 is a structural diagram of a communications system according to an embodiment of the present invention;
FIG. 3 is a flowchart of a signal sending method according to an embodiment of the present invention;
FIG. 3a is a flowchart of sending a random access channel by UE according to an embodiment of the present invention;
FIG. 3b is a flowchart of sending an uplink sounding reference signal by UE according to an embodiment of the present invention;
FIG. 3c is a flowchart of sending a public signal resource index by UE according to an embodiment of the present invention;
FIG. 4 is a structural diagram of a base station 30 according to an embodiment of the present invention;
FIG. 5 is a structural diagram of user equipment 40 according to an embodiment of the present invention;
FIG. 6 is a structural diagram of a communications system according to an embodiment of the present invention;
FIG. 7 is a flowchart of a signal sending method according to an embodiment of the present invention;
FIG. 7a is a flowchart of sending a random access channel by UE according to an embodiment of the present invention;
FIG. 7b is a flowchart of sending an uplink sounding reference signal by UE according to an embodiment of the present invention;
FIG. 7c is a flowchart of sending a public signal resource index by UE according to an embodiment of the present invention;
FIG. 8 is a structural diagram of a base station 80 according to an embodiment of the present invention;
FIG. 9 is a structural diagram of user equipment 90 according to an embodiment of the present invention; and
FIG. 10 is a structural diagram of a communications system according to an embodiment of the present invention.

### DESCRIPTION OF EMBODIMENTS

A main principle of the present invention is: A base station configures a plurality of public signal resources (where each public signal resource may correspond to one shaped beam) for user equipment (English: User Equipment, UE), each public signal resource has same configuration information, and the base station sends a public signal to the UE based on the configuration information of the public signal resource. When the plurality of public signal resources have the same configuration information, and the UE is handed over between shaped beams corresponding to the public signal resources, the base station may send the public signal of the current shaped beam by using a configuration parameter the same as that before the beam handover, and does not need to perform RRC reconfiguration on the public signal resources.

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be noted that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

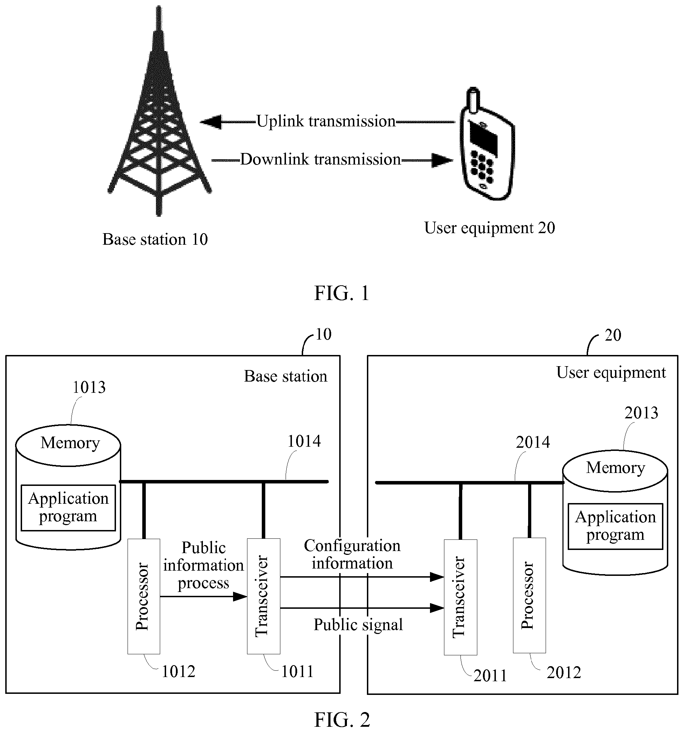

The signal processing method in the present invention may be deployed in a wireless communications system shown in FIG. 1. The wireless communications system may be any system of a Long Term Evolution (English: Long Term Evolution, LTE) network, a Wideband Code Division Multiple Access (English: Wideband Code Division Multiple Access, WCDMA) network, a Code Division Multiple Access (English: Code Division Multiple Access, CDMA) system, a Time Division Multiple Access (English: Time Division Multiple Access, TDMA) system, a Frequency Division Multiple Access (English: Frequency Division Multiple Addressing, FDMA) system, an Orthogonal Frequency Division Multiple Access (English: Orthogonal Frequency Division Multiple Access, OFDMA) system, a single-carrier FDMA (English: Single Carrier-FDMA, SC-FDMA) system, and a General Packet Radio Service (English: General Packet Radio Service, GPRS) system. Specifically, the method is applicable to the communications system. This is not limited in the embodiments of the present invention. In the embodiments of the present invention, a signal processing method, a device, and a system that are provided in the present invention are described only by using the LTE system shown in FIG. 1 as an example.

FIG. 1 is a schematic architectural diagram of a wireless communications system according to an embodiment of the present invention. As shown in FIG. 1, the system architecture may include a base station 10 and user equipment 20. The base station 10 and the user equipment 20 may establish a Radio Resource Control (English: Radio Resource Control, RRC) connection, to implement uplink transmission and downlink transmission between the base station 10 and the user equipment 20. The base station 10 may be a device communicating with the user equipment 20 by using one or more sectors at an air interface in an access network, for example, may be an evolved NodeB (NodeB, eNB, or e-NodeB) in LTE. This is not limited in the present invention. The user equipment 20 may be a wireless terminal, configured to communicate with one or more base stations by using a radio access network (English: Radio Access Network, RAN). For example, the user equipment 20 may be any terminal device, such as a personal communications service (English: Personal Communication Service, PCS) phone, a cordless phone, a Session Initiation Protocol (English: Session Initiation Protocol, SIP) phone, a wireless local loop (English: Wireless Local Loop, WLL) station, a personal digital assistant (English: Personal Digital Assistant, PDA), a tablet computer, a notebook computer, ultra-mobile personal computer (English: Ultra-mobile Personal Computer, UMPC), a netbook, or a personal digital assistant (English: Personal Digital Assistant, PDA).

Specifically, to implement a signal processing method provided in the present invention, as shown in FIG. 2, the base station 10 may include: a transceiver 1011, a processor 1012, a memory 1013, and at least one communications bus 1014. The communications bus 1014 is configured to implement connections and mutual communication between different components in the base station 10. The user equipment 20 may include: a transceiver 2011, a processor 2012, a memory 2013, and at least one communications bus 2014. The communications bus 2014 is configured to implement connections and mutual communication between different components in the user equipment 20.

The transceiver 1011 is a transceiver unit of the base station 10, and is configured to perform data exchange with an external network element. For example, the transceiver 1011 of the base station 10 may send data or configuration information to the user equipment 20, or receive data or configuration information sent by the user equipment 20.

The transceiver 2011 is a transceiver unit of the user equipment 20, and is configured to perform data exchange with an external network element. For example, the transceiver 2011 of the user equipment 20 may receive data or configuration information sent by the base station 10, or send data or configuration information to the base station 10.

The processor 1012 and the processor 2012 may be central processing units (English: Central Processing Unit, CPU), or may be application-specific integrated circuits (English: Application Specific Integrated Circuit, ASIC), or one or more integrated circuits configured to implement this embodiment of the present invention, for example, one or more microprocessors (English: Digital Signal Processor, DSP), or one or more field programmable gate arrays (English: Field Programmable Gate Array, FPGA).

The memory 1013 and the memory 2013 may be volatile memories (English: volatile memory), for example, random access memories (English: Random-Access Memory, RAM); or non-volatile memories (English: non-volatile memory), for example, read-only memories (English: Read-Only Memory, ROM), flash memories (English: flash memory), hard disks (English: Hard Disk Drive, HDD), or solid-state drives (English: Solid-State Drive, SSD); or a combination of the foregoing types of memories. The processor 1012 may implement various functions of the base station 10 by running or executing program code stored in the memory 1013 and invoking data stored in the memory 1013. The processor 2012 may implement various functions of the user equipment 20 by running or executing program code stored in the memory 2013 and invoking data stored in the memory 2013.

The communications bus 1014 and the communications bus 2014 may be classified into address buses, data buses, control buses, and the like, and may be Industry Standard Architecture (English: Industry Standard Architecture, ISA) buses, peripheral component interconnect (English: Peripheral Component, PCI) buses, Extended Industry Standard Architecture (English: Extended Industry Standard Architecture, EISA) buses, or the like. For ease of representation, merely a thick line is used for representation in FIG. 2, but it does not mean that there is only one bus or one type of buses.

For ease of description, the following embodiments show and describe in detail, in forms of steps, the signal processing method provided in the present invention. Shown steps may also be performed in any communications system different from the wireless communications system shown in FIG. 1. In addition, although a logical order of a signal sending method provided in the present invention is shown in the method flowchart, in some cases, shown or described steps may be performed in an order different from the order shown herein.

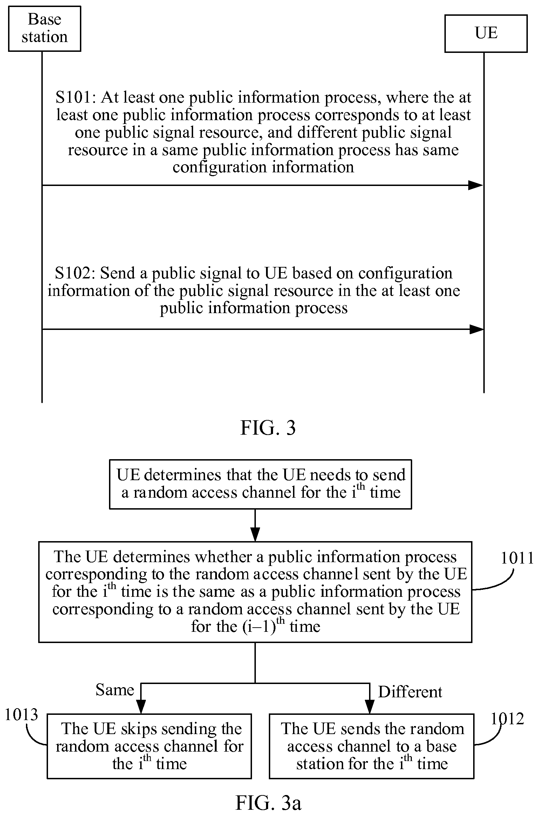

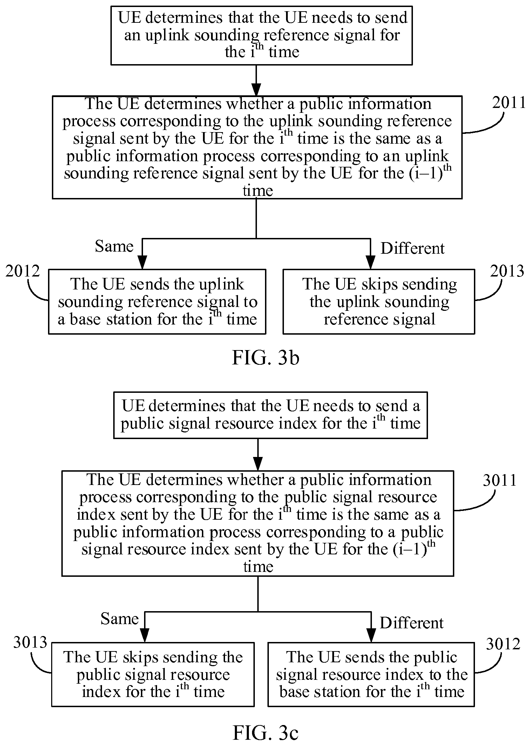

FIG. 3 is a flowchart of a signal processing method according to an embodiment of the present invention. The base station and the user equipment that are shown in FIG. 1 and FIG. 2 may interact to perform the method. For a base station side, the signal processing method may be referred to as a signal sending method. For a user equipment side, the signal processing method may be referred to as a signal receiving method. As shown in FIG. 3, the method may include the following steps.

S101: The base station notifies the UE of at least one public information process, and the UE obtains the at least one public information process notified by the base station, where the at least one public information process corresponds to at least one public signal resource, and different public signal resources in a same public information process have same configuration information.

The UE may be any UE in a cell served by the base station in the wireless communications network shown in FIG. 1.

The public information process is mainly used to indicate information such as a transmission resource required in a transmission procedure of a public signal and some other configuration indications. A public information process herein may be a set of a plurality of public signal resources, or may be a set of a plurality of shaped beams. Certainly, another definition manner is not excluded. This is not limited herein. For example, the public information process may include a public signal, and a time domain resource or a frequency domain resource required in transmission of a public signal.

Each public signal resource may correspond to one shaped beam, channel features of shaped beams corresponding to public signal resources in a same public information process are similar, and the public signal resources in the same public information process correspond to same configuration information. Each public signal resource may include a public signal and a transmission resource (for example, a time frequency resource or a port resource) corresponding to the public signal. The public signal may include at least one of a broadcast channel, a synchronizing signal, a cell-specific reference signal, and system information. It should be noted that the public signal includes, but is not limited to, the foregoing signals. The public signal may alternatively be a new signal that appears with development of communications technologies.

The configuration information of the public signal resource may be used to indicate a configuration format used to transmit the public signal between the base station and the UE. Specifically, the configuration information of the public signal resource includes, but is not limited to, at least one or more of a sequence setting of the public signal resource, a scrambling setting of the public signal resource, and configuration information of a random access channel (English: Random Access Channel, RACH) included in the public signal resource.

The sequence setting of the public signal resource may include a sequence setting of the synchronizing signal. The scrambling setting of the public signal resource may include a scrambling initialization setting parameter of the public signal resource, for example, a radio network temporary identifier (English: Radio Network Tempory Identity, RNTI), or the scrambling initialization parameter may be any other RNTI identifier, for example, a C-RNTI, an RAR-RNTI, or a P-RNTI. The configuration information of the RACH may include at least one of a configuration index of the random access channel (PRACH-Config-Index), a frequency domain offset of the random access channel (PRACH-Frequency-Offset), and a format configuration of the random access channel.

Optionally, after the UE accesses a cell in which the UE is located, the base station may configure at least one public information process for the UE, and sends the at least one configured public information process to the UE by using higher layer signaling, the control signaling, or another public signal different from the foregoing public signal. Configuration information of a public signal resource in the public information process may be notified to the UE by using the higher layer signaling or the control signaling. It should be noted that notification procedures of the higher layer signaling and the control signaling may be sequentially performed, or may be simultaneously performed. This is not limited in this embodiment of the present invention. The higher layer signaling may be RRC signaling.

For example, the base station may allocate four public information processes to the UE, and each public information process may correspond to four shaped beams. Channel features (for example, delay spread and a path loss) corresponding to the four shaped beams are different, but may be similar. Therefore, a same public information process may include four public signal resources that have same configuration information and respectively correspond to the four shaped beams.

S 102: The base station sends a public signal to the UE based on configuration information of the public signal resource in the at least one public information process, and the UE receives the public signal sent by the base station.

Optionally, the base station may configure a public signal based on configuration information of any public signal resource in any public information process, and sends the public signal to the UE after completing the configuration.

In this way, different public signal resources corresponding to same configuration information are placed into a same public information process, so that for the public signal resources in the same public information process, the base station may send, based on the same configuration information, the public signals corresponding to the public signal resources to the UE. When the UE is handed over between different shaped beams, and public signal resources corresponding to different shaped beams are in a same public information process, configuration information of the public signal resources remains unchanged. In this case, the UE does not need to send an RRC reconfiguration request to the base station, and the base station does not need to perform RRC reconfiguration on the public signal of the UE either.

For example, a public information process allocated by the base station to the UE includes four public signal resources. The four public signal resources correspond to four shaped beams. When the UE is moved, and a shaped beam corresponding to a public signal resource switches from a shaped beam 1 to a shaped beam 2, because public signal resources corresponding to the shaped beam 2 and the shaped beam 1 use same configuration information, the base station may send, by using configuration information the same as that of the shaped beam 1, a public signal corresponding to the shaped beam 2. In other words, the configuration information of the public signal resource originally corresponding to the shaped beam 1 may be directly reused in the public signal resource corresponding to the shaped beam 2, and the base station does not need to perform RRC reconfiguration on the public signal corresponding to the shaped beam 2 again.

In actual application, because transmission of a random access channel of the UE is bound to an optimal public signal resource, when the UE detects and selects an optimal public signal resource from a plurality of public signal resources, the UE transmits the random access channel based on the optimal public signal resource. That transmission of the random access channel is bound to the optimal public signal resource means that transmission resource information of the random access channel is configured by the optimal public signal, and the optimal public signal resource and access response information that is associated with the random access channel correspond to a same shaped beam. In this case, if the UE is frequently handed over between shaped beams, frequent access information reconfiguration and random access procedures are caused. Therefore, to avoid the problem, further, optionally, as shown in FIG. 3a, when the UE obtains the at least one public information process notified by the base station, and determines that the UE needs to send the random access channel for the i^{th} time, where i is a positive integer greater than or equal to 2, the method may further include the following steps:
1011: The UE determines whether a public information process corresponding to the random access channel sent by the UE for the i^{th} time is the same as a public information process corresponding to a random access channel sent by the UE for the (i-1)^{th} time; and if the public information process corresponding to the random access channel sent by the UE for the i^{th} time is different from the public information process corresponding to the random access channel sent by the UE for the (i-1)^{th} time, performs step 1012; or if the public information process corresponding to the random access channel sent by the UE for the i^{th} time is the same as the public information process corresponding to the random access channel sent by the UE for the (i-1)^{th} time, performs step 1013.
1012: The UE sends the random access channel to the base station for the i^{th} time.
1013: The UE skips sending the random access channel for the i^{th} time.

It may be understood that in this embodiment of the present invention, each public signal resource corresponds to one public information process, and transmission of the random access channel of the UE is bound to the optimal public signal resource. Therefore, in this embodiment of the present invention, the transmission of the random access channel of the UE also corresponds to a public information process in which the optimal public signal resource is located. In other words, the public information process corresponding to the random access channel sent by the UE is the public information process in which the optimal public signal resource bound to the random access channel sent by the UE is located.

In this way, by using the foregoing solution, when transmitting a random access channel, the UE may initiate a new random access channel procedure only when corresponding public information processes are different, thereby avoiding frequent access information reconfiguration and random access procedures caused by frequently handing over the UE between shaped beams, and reducing configuration signaling and UE power consumption.

In addition, in actual application, transmission of an uplink sounding reference signal (English: Sounding Reference Signal, SRS) of the UE is also bound to an optimal public signal resource. The UE may select an optimal public signal resource based on detection on a plurality of public signal resources, and transmit the SRS based on the optimal public signal resource. That transmission of the uplink sounding reference signal is bound to the optimal public signal resource means that the base station receives the uplink sounding reference signal by using a shaped beam corresponding to the optimal public signal resource. Therefore, to ensure that transmission of the uplink sounding reference signal of the UE is always based on a relatively optimal received shaped beam, further, optionally, as shown in FIG. 3b, when the UE obtains the at least one public information process notified by the base station, and determines that the UE needs to send the uplink sounding reference signal for the i^{th} time, where i is a positive integer greater than or equal to 2, the method further includes the following steps:
2011: The UE determines whether a public information process corresponding to the uplink sounding reference signal sent by the UE for the i^{th} time is the same as a public information process corresponding to an uplink sounding reference signal sent by the UE for the (i-1)^{th} time; and if the public information process corresponding to the uplink sounding reference signal sent by the UE for the i^{th} time is the same as the public information process corresponding to the random access channel sent by the UE for the (i-1)^{th} time, performs step 2012; or if the public information process corresponding to the uplink sounding reference signal sent by the UE for the i^{th} time is different from the public information process corresponding to the uplink sounding reference signal sent by the UE for the (i-1)^{th} time are, performs step 2013.
2012: The UE sends the uplink sounding reference signal to the base station for the i^{th} time.
2013: The UE skips sending the uplink sounding reference signal.

In this way, the UE sends the uplink sounding reference signal only when received shaped beams corresponding to transmission of the uplink sounding reference signal are located in a same public information process, thereby ensuring that transmission of the uplink sounding reference signal of the UE is always based on a relatively optimal received shaped beam, so that transmission performance of the uplink sounding reference signal is ensured.

Further, optionally, as shown in FIG. 3c, when the UE obtains the at least one public information process notified by the base station, and determines that the UE needs to send a public signal resource index for the i^{th} time, where i is a positive integer greater than or equal to 2, the method may further include the following steps:
3011: The UE determines whether a public information process corresponding to the public signal resource index sent by the UE for the i^{th} time is the same as a public information process corresponding to a public signal resource index sent by the UE for the (i-1)^{th} time; and if the public information process corresponding to the public signal resource index sent by the UE for the i^{th} time is different from the public information process corresponding to the public signal resource index sent by the UE for the (i-1)^{th} time, performs step 3012; or if the public information process corresponding to the public signal resource index sent by the UE for the i^{th} time is the same as the public information process corresponding to the public signal resource index sent by the UE for the (i-1)^{th} time, performs step 3013.
3012: The UE sends the public signal resource index to the base station for the i^{th} time.
3013: The UE skips sending the public signal resource index for the i^{th} time.

The public signal resource index may be a public signal resource index corresponding to an optimal public signal resource monitored by the UE. The public information process corresponding to the public signal resource index may be a public information process in which the optimal public signal resource corresponding to the public signal resource index is located.

In this way, by using this solution, when sending a public signal resource index, the UE sends the public signal resource index only when corresponding public information processes are different, thereby avoiding that the UE reports a public signal resource index corresponding to an optimal public signal resource to the base station once detecting the optimal public signal resource, and greatly reducing UE power consumption.

The foregoing mainly describes the solutions provided in the embodiments of the present invention from the perspective of interaction between the base station and the UE. It may be understood that, to implement the foregoing functions, the base station and the UE include a corresponding hardware structure and/or software module for performing each of the functions. A person of ordinary skill in the art should be easily aware that, the units and algorithm steps in the examples described with reference to the embodiments disclosed in this specification may be implemented by hardware or a combination of hardware and computer software. Whether the functions are performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In this embodiment of the present invention, functional units of the base station and the UE may be divided based on the foregoing method example. For example, each functional unit may be divided according to each function, or two or more functions may be integrated into one processing unit. The integrated unit may be implemented in a form of hardware, or may be implemented in a form of a software functional unit. It should be noted that unit division in this embodiment of the present invention is an example and is merely logical function division. During actual implementation, there may be another division manner.

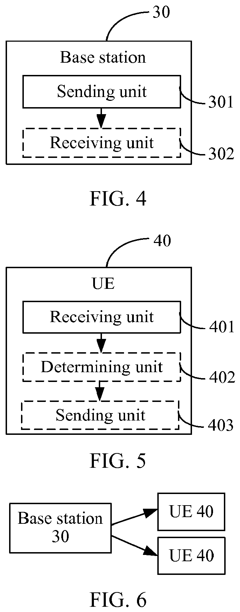

When functional units are divided corresponding to functions, FIG. 4 is a possible schematic structural diagram of a base station 30 used in the foregoing embodiments. The base station 30 includes a sending unit 301 and a receiving unit 302. The sending unit 301 is configured to support the base station in performing the procedures S101 and S102 in FIG. 3. The receiving unit 302 may be configured to support the base station in performing a procedure of receiving a signal sent by UE.

When an integrated unit is used, the sending unit 301 and the receiving unit 302 in the base station 30 shown in FIG. 4 may be integrated into the transceiver 1011 in the base station 10 shown in FIG. 2, to support the base station in performing the procedures S101 and S102 in FIG. 3 and the procedure of receiving the signal sent by the UE.

When functional units are divided corresponding to functions, FIG. 5 is a possible schematic structural diagram of UE 40 used in the foregoing embodiments. A base station 40 includes: a receiving unit 401, a determining unit 402, and a sending unit 403. The receiving unit 401 is configured to support the UE in performing the procedures S101 and S102 in FIG. 3. The determining unit 402 is configured to support the UE in performing a determining procedure. The sending unit 403 may be configured to support the UE in performing a procedure of sending a signal to a base station.

When an integrated unit is used, the receiving unit 401 and the sending unit 403 in the UE 40 shown in FIG. 5 may be integrated into the transceiver 2011 in the UE 20 shown in FIG. 2, to support the base station in performing the procedures S101 and S102 in FIG. 3 and the procedure of sending a signal to the base station. The determining unit 402 may be integrated into a processor of the UE 20 shown in FIG. 2 for implementation, or may be stored in a memory of the UE 20 in a form of program code, and invoked by a processor of the UE 20 to perform the function of the determining unit 402.

All related content of the steps in the foregoing method embodiments may be cited in function descriptions of corresponding functional units. Details are not described herein again.

According to still another aspect, an embodiment of the present invention further provides a signal processing system. As shown in FIG. 6, the signal sending system may include the base station 30 and at least one UE 40.

The signal sending system provided in this embodiment of the present invention implements the signal sending method shown in FIG. 3. Therefore, a same beneficial effect as that of the foregoing signal sending method can be achieved. Details are not described herein again.

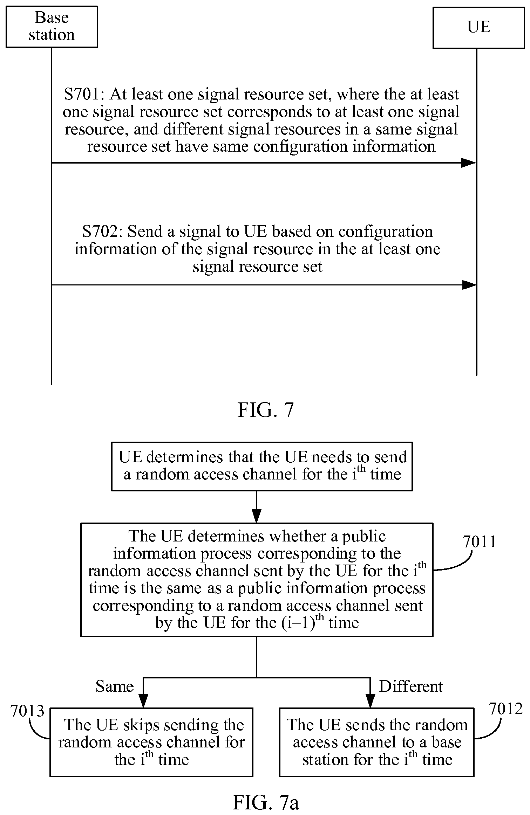

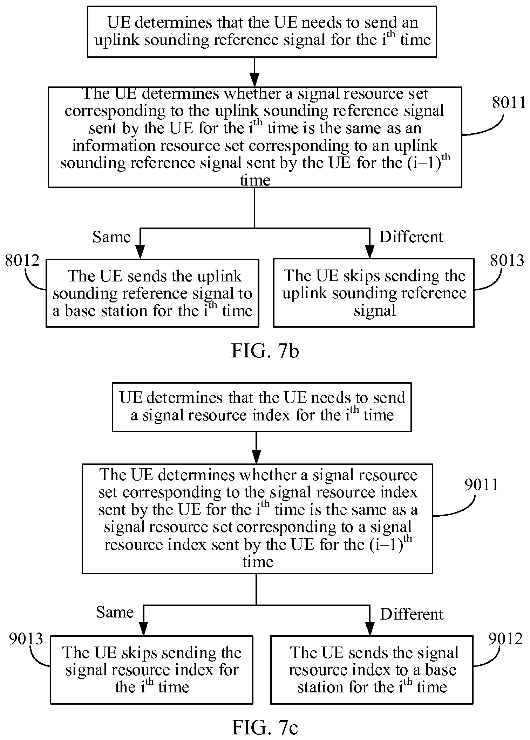

FIG. 7 is a flowchart of a signal processing method according to an embodiment of the present invention. The base station and the user equipment that are shown in FIG. 1 and FIG. 2 may interact to perform the method. For a base station side, the signal processing method may be referred to as a signal sending method. For a user equipment side, the signal processing method may be referred to as a signal receiving method. As shown in FIG. 7, the method may include the following steps.

S701: The base station notifies the UE of at least one signal resource set, and the UE obtains the at least one signal resource set notified by the base station, where the at least one signal resource set corresponds to at least one signal resource, and different signal resources in a same signal resource set have same configuration information.

The UE may be any UE in a cell served by the base station in the wireless communications network shown in FIG. 1.

The signal resource set is mainly used to indicate information such as a transmission resource required in a signal transmission procedure and some other configuration indications. A signal resource set herein may be a set of a plurality of signal resources, or may be a set of a plurality of shaped beams, or a set of a plurality of public signal resources, or a public information process. Certainly, another definition manner is not excluded. This is not limited herein. For example, the signal resource set may include a signal, a public signal, a time domain resource or a frequency domain resource required in signal transmission, and a time domain resource or a frequency domain resource required in transmission of a public signal.

Each signal resource may correspond to one shaped beam, shaped beams corresponding to signal resources in same signal resource sets have similar channel features, and signal resources in a same signal resource set correspond to same configuration information. Each signal resource may include a signal and a transmission resource (for example, a time frequency resource or a port resource) corresponding to the signal. The signal may include at least one of a broadcast channel, a synchronizing signal, a cell-specific reference signal, system information, and an uplink sounding reference signal. It should be noted that the signal includes, but is not limited to, the foregoing signals. The signal may alternatively be a new signal that appears with development of communications technologies.

The configuration information of the signal resource may be used to indicate a configuration format used to transmit the signal between the base station and the UE. Specifically, the configuration information of the signal resource includes, but is not limited to, at least one or more of a sequence setting of the signal resource, a scrambling setting of the signal resource, and configuration information of a random access channel (English: Random Access Channel, RACH) included in the signal resource.

The sequence setting of the signal resource may include a sequence setting of the synchronizing signal. The scrambling setting of the signal resource may include a scrambling initialization setting parameter of the signal resource, for example, a radio network temporary identifier (English: Radio Network Tempory Identity, RNTI), or the scrambling initialization parameter may be any other RNTI identifier, for example, a C-RNTI, an RAR-RNTI, or a P-RNTI. The configuration information of the RACH may include at least one of a configuration index of the random access channel (PRACH-Config-Index), a frequency domain offset of the random access channel (PRACH-Frequency-Offset), and a format configuration of the random access channel.

Optionally, after the UE accesses a cell in which the UE is located, the base station may configure at least one signal resource set for the UE, and sends at least one configured signal resource set to the UE by using higher layer signaling, the control signaling, or another signal different from the foregoing signal. Configuration information of a signal resource in the signal resource set may be notified to the UE by using the higher layer signaling or the control signaling. It should be noted that notification procedures of the higher layer signaling and the control signaling may be sequentially performed, or may be simultaneously performed. This is not limited in this embodiment of the present invention. The higher layer signaling may be RRC signaling.

For example, the base station may allocate four signal resource sets to the UE, and each signal resource set may correspond to four shaped beams. Channel features (for example, delay spread and a path loss) corresponding to the four shaped beams are different, but may be similar. Therefore, a same signal resource set may include four signal resources that have same configuration information and respectively correspond to the four shaped beams.

S702: The base station sends a signal to the UE based on configuration information of the signal resource in the at least one signal resource set, and the UE receives the signal sent by the base station.

Optionally, the base station may configure a signal based on configuration information of any signal resource in any signal resource set, and sends the signal to the UE after completing the configuration.

In this way, different signal resources corresponding to same configuration information are placed into a same signal resource set, so that for the signal resources in the same signal resource set, the base station may send, based on the same configuration information, signals corresponding to the signal resources to the UE. When the UE is handed over between different shaped beams, and signal resources corresponding to different shaped beams are in a same signal resource set, configuration information of the signal resources remains unchanged. In this case, the UE does not need to send an RRC reconfiguration request to the base station, and the base station does not need to perform RRC reconfiguration on the signal of the UE either.

For example, a signal resource set allocated by the base station to the UE includes four signal resources. The four signal resources correspond to four shaped beams. When the UE is moved, and a shaped beam corresponding to a signal resource switches from a shaped beam 1 to a shaped beam 2, because signal resources corresponding to the shaped beam 2 and the shaped beam 1 use same configuration information, the base station may send, by using configuration information the same as that of the shaped beam 1, a signal corresponding to the shaped beam 2. In other words, the configuration information of the signal resource originally corresponding to the shaped beam 1 may be directly reused in the signal resource corresponding to the shaped beam 2, and the base station does not need to perform RRC reconfiguration on the signal corresponding to the shaped beam 2 again.

In actual application, because transmission of a random access channel of the UE is bound to an optimal signal resource, when the UE detects and selects an optimal signal resource from a plurality of signal resources, the UE transmits the random access channel based on the optimal signal resource. That transmission of the random access channel is bound to the optimal signal resource means that transmission resource information of the random access channel is configured by the optimal signal, and the optimal signal resource and access response information that is associated with the random access channel correspond to a same shaped beam. In this case, if the UE is frequently handed over between shaped beams, frequent access information reconfiguration and random access procedures are caused. Therefore, to avoid the problem, further, optionally, as shown in FIG. 7a, when the UE obtains the at least one signal resource set notified by the base station, and determines that the UE needs to send the random access channel for the i^{th} time, where i is a positive integer greater than or equal to 2, the method may further include the following steps:

7011: The UE determines whether a signal resource set corresponding to the random access channel sent by the UE for the i^{th} time is the same as a signal resource set corresponding to a random access channel sent by the UE for the (i-1)^{th} time; and if the signal resource set corresponding to the random access channel sent by the UE for the i^{th} time is different from the signal resource set corresponding to the random access channel sent by the UE for the (i-1)^{th} time, performs step 7012; or if the signal resource set corresponding to the random access channel sent by the UE for the i^{th} time is the same as the signal resource set corresponding to the random access channel sent by the UE for the (i-1)^{th} time, performs step 7013.

7012: The UE sends the random access channel to the base station for the i^{th} time.

7013: The UE skips sending the random access channel for the i^{th} time.

It may be understood that in this embodiment of the present invention, each signal resource corresponds to one signal resource set, and transmission of the random access channel of the UE is bound to an optimal signal resource. Therefore, in this embodiment of the present invention, the transmission of the random access channel of the UE also corresponds to a signal resource set in which the optimal signal resource is located. In other words, the signal resource set corresponding to the random access channel sent by the UE may be the signal resource set in which the optimal signal resource bound to the random access channel sent by the UE is located.

In this way, by using the foregoing solution, when transmitting a random access channel, the UE may initiate a new random access channel procedure only when corresponding signal resource sets are different, thereby avoiding frequent access information reconfiguration and random access procedures caused by frequently handing over the UE between shaped beams, and reducing configuration signaling and UE power consumption.

In addition, in actual application, transmission of an uplink sounding reference signal (English: Sounding Reference Signal, SRS) of the UE is also bound to an optimal signal resource. The UE may select an optimal signal resource based on detection on a plurality of signal resources, and transmit the SRS based on the optimal signal resource. That transmission of the uplink sounding reference signal is bound to the optimal signal resource means that the base station receives the uplink sounding reference signal by using a shaped beam corresponding to the optimal signal resource. Therefore, to ensure that transmission of the uplink sounding reference signal of the UE is always based on a relatively optimal received shaped beam, further, optionally, as shown in FIG. 7b, when the UE obtains the at least one signal resource set notified by the base station, and determines that the UE needs to send the uplink sounding reference signal for the i^{th} time, where i is a positive integer greater than or equal to 2, the method further includes the following steps:
8011: The UE determines whether a signal resource set corresponding to the uplink sounding reference signal sent by the UE for the i^{th} time is the same as a signal resource set corresponding to an uplink sounding reference signal sent by the UE for the (i-1)^{th} time; and if the signal resource set corresponding to the uplink sounding reference signal sent by the UE for the i^{th} time is the same as the signal resource set corresponding to the uplink sounding reference signal sent by the UE for the (i-1)^{th} time, performs step 8012; or if the signal resource set corresponding to the uplink sounding reference signal sent by the UE for the i^{th} time is different from the signal resource set corresponding to the uplink sounding reference signal sent by the UE for the (i-1)^{th} time are, performs step 8013.
8012: The UE sends the uplink sounding reference signal to the base station for the i^{th} time.
8013: The UE skips sending the uplink sounding reference signal.

In this way, the UE sends the uplink sounding reference signal only when received shaped beams corresponding to transmission of the uplink sounding reference signal are located in a same signal resource set, thereby ensuring that transmission of the uplink sounding reference signal of the UE is always based on a relatively optimal received shaped beam, so that transmission performance of the uplink sounding reference signal is ensured.

Further, optionally, as shown in FIG. 7c, when the UE obtains the at least one signal resource set notified by the base station, and determines that the UE needs to send a signal resource index for the i^{th} time, where i is a positive integer greater than or equal to 2, the method may further include the following steps:
9011: The UE determines whether a signal resource set corresponding to the signal resource index sent by the UE for the i^{th} time is the same as a signal resource set corresponding to a signal resource index sent by the UE for the (i-1)^{th} time; and if the signal resource set corresponding to the signal resource index sent by the UE for the i^{th} time is different from the signal resource set corresponding to the signal resource index sent by the UE for the (i-1)^{th} time, performs step 9012; or if the signal resource set corresponding to the signal resource index sent by the UE for the i^{th} time is the same as the signal resource set corresponding to the signal resource index sent by the UE for the (i-1)^{th} time, performs step 9013.
9012: The UE sends the signal resource index to the base station for the i^{th} time.
9013: The UE skips sending the signal resource index for the i^{th} time.

The signal resource index may be a signal resource index corresponding to an optimal signal resource monitored by the UE. The signal resource set corresponding to the signal resource index may be a signal resource set in which the optimal signal resource corresponding to the signal resource index is located.

In this way, by using this solution, when sending a signal resource index, the UE may send the signal resource index only when corresponding signal resource sets are different, thereby avoiding that the UE reports a signal resource index corresponding to an optimal signal resource to the base station once detecting the optimal signal resource, and greatly reducing UE power consumption.

The foregoing mainly describes the solutions provided in the embodiments of the present invention from the perspective of interaction between the base station and the UE. It may be understood that, to implement the foregoing functions, the base station and the UE include a corresponding hardware structure and/or software module for performing each of the functions. A person of ordinary skill in the art should be easily aware that, the units and algorithm steps in the examples described with reference to the embodiments disclosed in this specification may be implemented by hardware or a combination of hardware and computer software. Whether the functions are performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In this embodiment of the present invention, functional units of the base station and the UE may be divided based on the foregoing method example. For example, each functional unit may be divided according to each function, or two or more functions may be integrated into one processing unit. The integrated unit may be implemented in a form of hardware, or may be implemented in a form of a software functional unit. It should be noted that the unit division in the embodiments of the present invention is an example, and is merely logical function division. There may be another division manner in actual implementation.

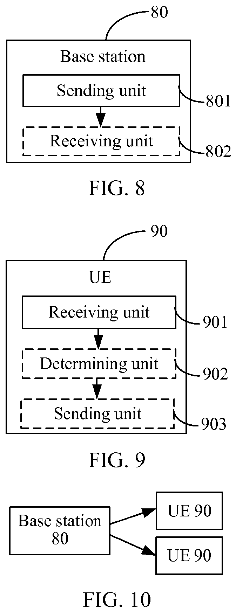

When functional units are divided corresponding to functions, FIG. 8 is a possible schematic structural diagram of a base station 80 used in the foregoing embodiments. The base station 80 includes a sending unit 801 and a receiving unit 802. The sending unit 801 is configured to support the base station in performing the procedures S701 and S702 in FIG. 7. The receiving unit 802 may be configured to support the base station in performing a procedure of receiving a signal sent by UE.

When an integrated unit is used, the sending unit 801 and the receiving unit 802 in the base station 80 shown in FIG. 8 may be integrated into the transceiver 1011 in the base station 10 shown in FIG. 2, to support the base station in performing the procedures S701 and S702 in FIG. 7 and a procedure of receiving the signal sent by the UE.

When functional units are divided corresponding to functions, FIG. 9 is a possible schematic structural diagram of UE 90 used in the foregoing embodiments. The base station 90 includes: a receiving unit 901, a determining unit 902, and a sending unit 907. The receiving unit 901 is configured to support the UE in performing the procedures S701 and S702 in FIG. 7. The determining unit 902 is configured to support the UE in performing a determining procedure. The sending unit 903 may be configured to support the UE in performing a procedure of sending a signal to a base station.

When an integrated unit is used, the receiving unit 901 and the sending unit 907 in the UE 90 shown in FIG. 9 may be integrated into the transceiver 2011 in the UE 20 shown in FIG. 2, to support the base station in performing the procedures S701 and S702 in FIG. 7 and the procedure of sending a signal to the base station. The determining unit 902 may be integrated into a processor of the UE 20 shown in FIG. 2 for implementation, or may be stored in a memory of the UE 20 in a form of program code, and invoked by a processor of the UE 20 to perform the function of the determining unit 902.

All related content of the steps in the foregoing method embodiments may be cited in function descriptions of corresponding functional units. Details are not described herein again.

According to still another aspect, an embodiment of the present invention further provides a signal processing system. As shown in FIG. 10, the signal sending system may include the base station 80 and at least one UE 90.

The signal sending system provided in this embodiment of the present invention implements the signal sending method shown in FIG. 7, FIG. 7a, FIG. 7b, and FIG. 7c. Therefore, a same beneficial effect as that of the foregoing signal sending method can be achieved. Details are not described herein again.

A person of skill in the art should be aware that in one or more of the foregoing examples, the functions described in the present invention may be implemented by using hardware, software, firmware, or any combination thereof. When this application is implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general or dedicated computer.

## Claims

1. A signal sending method, comprising:
• notifying, by a base station, a user equipment, UE, of at least one signal resource set, wherein each signal resource set corresponds to at least one signal resource, and different signal resources in a same signal resource set have same configuration information (S 101); and
• sending, by the base station, a signal to the UE based on said configuration information of a signal resource in the at least one signal resource set (S 102),
• wherein the method further comprising:
∘ in a first alternative,
∘ the UE determines whether the at least one signal resource set corresponding to a random access channel that is required to be sent by the UE for the i^{th} time is the same as a signal resource set corresponding to a random access channel sent by the UE for (i-1)^{th} time, where is a positive integer greater than or equal to 2;
∘ only when corresponding signal resource sets are different, the UE sends the random access channel to the base station for the i^{th} time;
∘ receiving, by the base station, a random access signal of the random access channel sent by the UE for the i^{th} time, wherein the at least one signal resource set corresponding to the random access signal sent by the UE for the i^{th} time is different from the signal resource set corresponding to a random access signal of the random access channel sent by the UE for the (i-1)^{th} time,
∘ in a second alternative,
∘ the UE determines whether the at least one signal resource set corresponding to an uplink sounding reference signal that is required to be sent by the UE for the i^{th} time is the same as a signal resource set corresponding to an uplink sounding reference signal sent by the UE for (i-1)^{th} time, where is a positive integer greater than or equal to 2;
∘ only when corresponding signal resource sets are the same, the UE sends the uplink sounding reference signal to the base station for the i^{th} time;
∘ receiving, by the base station, the uplink sounding reference signal sent by the UE for the i^{th} time, wherein the at least one signal resource set corresponding to the uplink sounding reference signal sent by the UE for the i^{th} time is the same as the signal resource set corresponding to the uplink sounding reference signal sent by the UE for the (i-1)^{th} time.

2. The method according to claim 1, wherein the configuration information of the signal resource comprises at least one or more of a sequence setting of the signal resource, a scrambling setting of the signal resource, and configuration information of a random access channel comprised in the signal resource.

3. The method according to claim 1 or 2, wherein the notifying, by a base station, user equipment UE of at least one signal resource set comprises:
notifying, by the base station, the UE of the at least one signal resource set by using higher layer signaling, control signaling, or another signal different from the signal, wherein the configuration information of the signal resource in the at least one signal resource set is notified by the base station to the user equipment by using the higher layer signaling or the control signaling.

4. The method according to claim 1, wherein the signal comprises at least one of a broadcast channel, a synchronizing signal, a cell-specific reference signal, system information, and an uplink sounding reference signal.

5. A signal receiving method, comprising:
• obtaining, by a user equipment, UE, at least one signal resource set notified by a base station, wherein each signal resource set corresponds to at least one signal resource, and different signal resources in a same signal resource set have same configuration information (S101); and
• receiving, by the UE, a signal sent by the base station based on said configuration information of a signal resource in the at least one signal resource set (S 102),
• wherein the method further comprises:
∘ in a first alternative,
∘ the UE determines whether the at least one signal resource set corresponding to a random access channel that is required to be sent by the UE for the i^{th} time is the same as a signal resource set corresponding to a random access channel sent by the UE for (i-1)^{th} time, where i is a positive integer greater than or equal to 2;
∘ only when corresponding signal resource sets are different, the UE sends the random access channel to the base station for the i^{th} time;
∘ in a second alternative,
∘ the UE determines whether the at least one signal resource set corresponding to an uplink sounding reference signal that is required to be sent by the UE for the i^{th} time is the same as a signal resource set corresponding to an uplink sounding reference signal sent by the UE for (i-1)^{th} time, where is a positive integer greater than or equal to 2;
- only when corresponding signal resource sets are the same, the UE sends the uplink sounding reference signal to the base station for the i^{th} time.

6. The method according to claim 5, wherein the configuration information of the signal resource comprises at least one or more of a sequence setting of the signal resource, a scrambling setting of the signal resource, and configuration information of a random access channel comprised in the signal resource.

7. The method according to claim 5 or 6, wherein the obtaining, by user equipment UE, at least one signal resource set notified by the base station comprises:
obtaining, by the UE, configuration information sent by the base station by using higher layer signaling or control information, or another signal different from the signal, wherein the configuration information of the signal resource in the at least one signal resource set is notified by the base station to the UE by using the higher layer signaling or the control signaling.

8. A base station (30) configured to perform any of the methods according to claims 1 -4.

9. User equipment, UE, configured to perform any of the methods according to claims 5-7.

## Patentansprüche

1. Signalsendeverfahren, das Folgendes umfasst:
• Mitteilen einer Benutzereinrichtung *(userequipment-* UE) wenigstens eines Signalressourcensatzes durch eine Basisstation, wobei jeder Signalressourcensatz wenigstens einer Signalressource entspricht und verschiedene Signalressourcen in einem gleichen Signalressourcensatz gleiche Konfigurationsinformationen aufweisen (S 101); und
• Senden eines Signals durch die Basisstation an die UE basierend auf den Konfigurationsinformationen einer Signalressource in dem wenigstens einen Signalressourcensatz (S 102),
• wobei das Verfahren ferner Folgendes umfasst:
∘ in einer ersten Alternative:
∘ bestimmt die UE, ob der wenigstens eine Signalressourcensatz, der einem Direktzugriffskanal entspricht, der durch die UE zum i-ten Mal gesendet werden muss, der gleiche ist wie ein Signalressourcensatz, der einem Direktzugriffskanal entspricht, der durch die UE zum (i-1)-ten Mal gesendet wird, wo i eine positive ganze Zahl ist, die wenigstens 2 ist;
∘ nur wenn entsprechende Signalressourcensätze verschieden sind, sendet die UE den Direktzugriffskanal zum i-ten Mal an die Basisstation;
∘ Empfangen eines Direktzugriffssignals des Direktzugriffskanals, der durch die UE zum i-ten Mal gesendet wird, durch die Basisstation, wobei der wenigstens eine Signalressourcensatz, der dem Direktzugriffssignal entspricht, der durch die UE zum i-ten Mal gesendet wird, von dem Signalressourcensatz verschieden ist, der einem Direktzugriffssignal eines Direktzugriffskanals entspricht, der durch die UE zum (i-1)-ten Mal gesendet wird, o in einer zweiten Alternative,
∘ bestimmt die UE, ob der wenigstens eine Signalressourcensatz, der einem Uplink-Sondierungsreferenzsignal entspricht, das durch die UE zum i-ten Mal gesendet werden muss, der gleiche ist wie ein Signalressourcensatz, der einem Uplink-Sondierungsreferenzsignal entspricht, das durch die UE zum (i-1)-ten Mal gesendet wird, wo i eine positive ganze Zahl ist, die wenigstens 2 ist;
∘ nur wenn entsprechende Signalressourcensätze gleich sind, sendet die UE das Uplink-Sondierungsreferenzsignal zum i-ten Mal an die Basisstation;
∘ Empfangen des Uplink-Sondierungsreferenzsignals, das durch die UE zum i-ten Mal gesendet wird, durch die Basisstation, wobei der wenigstens eine Signalressourcensatz, der dem Uplink-Sondierungsreferenzsignal entspricht, das durch die UE zum i-ten Mal gesendet wird, der gleiche wie der Signalressourcensatz ist, der einem Uplink-Sondierungsreferenzsignal entspricht, das durch die UE zum (i-1)-ten Mal gesendet wird.

2. Verfahren nach Anspruch 1, wobei die Konfigurationsinformationen der Signalressource eine Sequenzeinstellung der Signalressource, eine Verwürfelungseinstellung der Signalressource und/oder Konfigurationsinformationen eines Direktzugriffskanals umfassen, die in der Signalressource enthalten sind.

3. Verfahren nach Anspruch 1 oder 2, wobei das Mitteilen einer Benutzereinrichtung (UE) wenigstens eines Signalressourcensatzes durch eine Basisstation Folgendes umfasst:
Mitteilen der UE des wenigstens einen Signalressourcensatzes durch die Basisstation durch Nutzung einer Signalisierung höherer Schichten, einer Steuersignalisierung oder eines anderen Signals, das verschieden von dem Signal ist, wobei die Konfigurationsinformationen der Signalressource in dem wenigstens einen Signalressourcensatz durch die Basisstation an die Benutzereinrichtung durch Nutzung der Signalisierung höherer Schichten oder der Steuersignalisierung mitgeteilt werden.

4. Verfahren nach Anspruch 1, wobei das Signal einen Broadcast-Kanal, ein Synchronisationssignal, ein zellenspezifisches Referenzsignal, Systeminformationen und/oder ein Uplink-Sondierungsreferenzsignal umfasst.

5. Signalempfangsverfahren, das Folgendes umfasst:
• Erhalten wenigstens eines Signalressourcensatzes, der durch eine Basisstation mitgeteilt wird, durch eine Benutzereinrichtung (UE), wobei jeder Signalressourcensatz wenigstens einer Signalressource entspricht und verschiedene Signalressourcen in einem gleichen Signalressourcensatz gleiche Konfigurationsinformationen aufweisen (S 101); und
• Empfangen eines Signals durch die UE, das durch die Basisstation basierend auf den Konfigurationsinformationen einer Signalressource in dem wenigstens einen Signalressourcensatz gesendet wird (S 102),
• wobei das Verfahren ferner umfasst:
∘ in einer ersten Alternative:
∘ bestimmt die UE, ob der wenigstens eine Signalressourcensatz, der einem Direktzugriffskanal entspricht, der durch die UE zum i-ten Mal gesendet werden muss, der gleiche ist wie ein Signalressourcensatz, der einem Direktzugriffskanal entspricht, der durch die UE zum (i-1)-ten Mal gesendet wird, wo i eine positive ganze Zahl ist, die wenigstens 2 ist;
∘ nur wenn entsprechende Signalressourcensätze verschieden sind, sendet die UE den Direktzugriffskanal zum i-ten Mal an die Basisstation;
∘ in einer zweiten Alternative:
∘ bestimmt die UE, ob der wenigstens eine Signalressourcensatz, der einem Uplink-Sondierungsreferenzsignal entspricht, das durch die UE zum i-ten Mal gesendet werden muss, der gleiche ist wie ein Signalressourcensatz, der einem Uplink-Sondierungsreferenzsignal entspricht, das durch die UE zum (i-1)-ten Mal gesendet wird, wo i eine positive ganze Zahl ist, die wenigstens 2 ist;
- nur wenn entsprechende Signalressourcensätze gleich sind, sendet die UE das Uplink-Sondierungsreferenzsignal zum i-ten Mal an die Basisstation.

6. Verfahren nach Anspruch 5, wobei die Konfigurationsinformationen der Signalressource eine Sequenzeinstellung der Signalressource, eine Verwürfelungseinstellung der Signalressource und/oder Konfigurationsinformationen eines Direktzugriffskanals umfassen, die in der Signalressource enthalten sind.

7. Verfahren nach Anspruch 5 oder 6, wobei das Erhalten wenigstens eines Signalressourcensatzes, der durch die Basisstation mitgeteilt wird, durch eine Benutzereinrichtung (UE) Folgendes umfasst:
Erhalten von Konfigurationsinformationen, die durch die Basisstation durch Nutzung einer Signalisierung höherer Schichten oder einer Steuersignalisierung oder eines anderen Signals, das verschieden von dem Signal ist, gesendet werden, durch die UE, wobei die Konfigurationsinformationen der Signalressource in dem wenigstens einen Signalressourcensatz durch die Basisstation an die UE durch Nutzung der Signalisierung höherer Schichten oder der Steuersignalisierung mitgeteilt werden.

8. Basisstation (30), die konfiguriert ist, um eines der Verfahren nach Anspruch 1-4 durchzuführen.

9. Benutzereinrichtung (UE), die konfiguriert ist, um eines der Verfahren nach Anspruch 5-7 durchzuführen.

## Revendications

1. Procédé d'envoi de signal, comprenant :
• la notification, par une station de base, d'un équipement utilisateur, UE, d'au moins un ensemble de ressources de signal, chaque ensemble de ressources de signal correspondant à au moins une ressource de signal, et différentes ressources de signal dans un même ensemble de ressources de signal présentant de mêmes informations (S 101) de configuration ; et
• l'envoi, par la station de base, d'un signal à l'UE en fonction desdites informations de configuration d'une ressource de signal dans l'au moins un ensemble (S 102) de ressources de signal,
• le procédé comprenant en outre :
∘ dans une première alternative,
∘ la détermination par l'UE du fait de savoir si l'au moins un ensemble de ressources de signal correspondant à un canal d'accès aléatoire qui doit être envoyé par l'UE pour la i^{ème} fois est le même qu'un ensemble de ressources de signal correspondant à un canal d'accès aléatoire envoyé par l'UE pour la (i - 1)^{ème} fois, où i est un entier positif supérieur ou égal à 2 ;
∘ seulement lorsque les ensembles de ressources de signal correspondants sont différents, l'envoi par l'UE du canal d'accès aléatoire à la station de base pour la i^{ème} fois ;
∘ la réception, par la station de base, d'un signal d'accès aléatoire du canal d'accès aléatoire envoyé par l'UE pour la i^{ème} fois, l'au moins un ensemble de ressources de signal correspondant au signal d'accès aléatoire envoyé par l'UE pour la i^{ème} fois étant différent de l'ensemble de ressources de signal correspondant à un signal d'accès aléatoire de canal d'accès aléatoire envoyé par l'UE pour la (i - 1)^{ème} fois,
∘ dans une seconde alternative,
∘ la détermination par l'UE du fait de savoir si l'au moins un ensemble de ressources de signal correspondant à un signal de référence de sondage de liaison montante qui doit être envoyé par l'UE pour la i^{ème} fois est le même qu'un ensemble de ressources de signal correspondant à un signal de référence de sondage de liaison montante envoyé par l'UE pour la (i - 1)^{ème} fois, où i est un entier positif supérieur ou égal à 2 ;
∘ seulement lorsque les ensembles de ressources de signal correspondants sont les mêmes, l'envoi par l'UE du signal de référence de sondage de liaison montante à la station de base pour la i^{ème} fois ;
∘ la réception, par la station de base, du signal de référence de sondage de liaison montante envoyé par l'UE pour la i^{ème} fois, l'au moins un ensemble de ressources de signal correspondant au signal de référence de sondage de liaison montante envoyé par l'UE pour la i^{ème} fois étant le même que l'ensemble de ressources de signal correspondant au signal de référence de sondage de liaison montante envoyé par l'UE pour la (i - 1)^{ème} fois.

2. Procédé selon la revendication 1, dans lequel les informations de configuration de la ressource de signal comprennent un réglage de séquence de la ressource de signal et/ou un réglage d'embrouillage de la ressource de signal et/ou des informations de configuration d'un canal d'accès aléatoire compris dans la ressource de signal.

3. Procédé selon la revendication 1 ou 2, dans lequel la notification, par une station de base, de l'équipement utilisateur, UE, d'au moins un ensemble de ressources de signal comprend :
la notification, par la station de base, à l'UE de l'au moins un ensemble de ressources de signal à l'aide d'une signalisation de couche supérieure, d'une signalisation de commande ou d'un autre signal qui diffère du signal, les informations de configuration de la ressource de signal dans l'au moins un ensemble de ressources de signal étant notifiées par la station de base à l'équipement utilisateur à l'aide de la signalisation de couche supérieure ou de la signalisation de commande.

4. Procédé selon la revendication 1, dans lequel le signal comprend un canal de diffusion et/ou un signal de synchronisation et/ou un signal de référence spécifique à une cellule et/ou des informations de système et/ou un signal de référence de sondage de liaison montante.

5. Procédé de réception de signal de référence, comprenant :
• l'obtention, par un équipement utilisateur, UE, d'au moins un ensemble de ressources de signal notifiées par une station de base, chaque ensemble de ressources de signal correspondant à au moins une ressource de signal, et différentes ressources de signal dans un même ensemble de ressources de signal présentant de mêmes informations (S 101) de configuration ; et
• la réception, par l'UE, d'un signal envoyé par la station de base en fonction desdites informations de configuration d'une ressource de signal dans l'au moins un ensemble (S 102) de ressources de signal,
• le procédé comprenant en outre :
∘ dans une première alternative,
∘ la détermination par l'UE du fait de savoir si l'au moins un ensemble de ressources de signal correspondant à un canal d'accès aléatoire qui doit être envoyé par l'UE pour la i^{ème} fois est le même qu'un ensemble de ressources de signal correspondant à un canal d'accès aléatoire envoyé par l'UE pour la (i - 1)^{ème} fois, où i est un entier positif supérieur ou égal à 2 ;
∘ seulement lorsque les ensembles de ressources de signal correspondants sont différents, l'envoi par l'UE du canal d'accès aléatoire à la station de base pour la i^{ème} fois ;
∘ dans une seconde alternative,
∘ la détermination par l'UE du fait de savoir si l'au moins un ensemble de ressources de signal correspondant à un signal de référence de sondage de liaison montante qui doit être envoyé par l'UE pour la i^{ème} fois est le même qu'un ensemble de ressources de signal correspondant à un signal de référence de sondage de liaison montante envoyé par l'UE pour la (i - 1)^{ème} fois, où i est un entier positif supérieur ou égal à 2 ;
- seulement lorsque les ensembles de ressources de signal correspondants sont les mêmes, l'envoi par l'UE du signal de référence de sondage de liaison montante à la station de base pour la i^{ème} fois.

6. Procédé selon la revendication 5, dans lequel les informations de configuration de la ressource de signal comprennent un réglage de séquence de la ressource de signal et/ou un réglage d'embrouillage de la ressource de signal et/ou des informations de configuration d'un canal d'accès aléatoire compris dans la ressource de signal.

7. Procédé selon la revendication 5 ou 6, dans lequel l'obtention, par l'équipement utilisateur, UE, d'au moins un ensemble de ressources de signal notifiées par la station de base comprend :
l'obtention, par l'UE, d'informations de configuration envoyées par la station de base à l'aide de signalisation de couche supérieure ou d'informations de commande, ou d'un autre signal qui diffère du signal, les informations de configuration de la ressource de signal dans l'au moins un ensemble de ressources de signal étant notifiées par la station de base à l'UE à l'aide de la signalisation de couche supérieure ou de la signalisation de commande.

8. Station de base (30) configurée pour réaliser l'un quelconque des procédés selon les revendications 1 à 4.

9. Équipement utilisateur, UE, configuré pour réaliser l'un quelconque des procédés selon les revendications 5 à 7.
